# EUROPEAN PATENT APPLICATION

(11) **EP 3 758 309 A1**
(43) Date of publication of application: **30.12.2020**
(21) Application number: 19784330.3
(22) Date of filing: 12.04.2019
(51) Int. Cl.: H04L 12/725

(54) **METHOD AND APPARATUS FOR SERVICE TRANSMISSION**

(30) Priority: 13.04.2018 CN 201810332048
(71) Applicant: Huawei Technologies Co., Ltd., Longgang Shenzhen, Guangdong 518129 (CN)
(72) Inventor: TANG, Xiaoyong, Shenzhen, Guangdong 518129 (CN); QIU, Jing, Shenzhen, Guangdong 518129 (CN)
(74) Representative: Körber, Martin Hans
(86) International application number: PCT/CN2019/082510
(87) International publication number: WO 2019/196939

(57) **Abstract**

This application provides a service transmission method. The method includes: sending, by a first node, a route request to a second node at a first moment, where the route request is used to request a routing path for at least one service; receiving, by the first node, a route response message at a second moment, where the route response message includes a route distinguisher, and the route distinguisher is used to indicate the routing path; and determining, by the first node based on a time interval between the first moment and the second moment, a target service that is in the at least one service and that is served by the routing path. In this way, the first node may determine, based on duration of the time interval between the first moment and the second moment, the target service that can be served by the routing path. Therefore, routing paths satisfying requirements of different services can be selected for the different services, thereby improving reliability of selecting the routing path for a service.

## Description

This application claims priority to Chinese Patent Application No. 201810332048.0, filed with the Chinese Patent Office on April 13, 2018 and entitled "SERVICE TRANSMISSION METHOD AND APPARATUS", which is incorporated herein by reference in its entirety.

### TECHNICAL FIELD

This application relates to the communications field, and more specifically, to a service transmission method and apparatus.

### BACKGROUND

In a traditional wireless mesh (mesh) network, when a node in the network has a route requirement, the node initiates a route request (PREQ) message, and carries a route selection indicator (latency, transmission capability, load, and the like) in the PREQ message. After a node in the mesh network receives the PREQ message, the node finds, based on the route selection indicator, a node that can access the network. After the node that can access the network is found, the node that can access the network initiates a route response (PREP) message, content that is of a route metric and that is carried in the PREQ message is fed back to a route initiation node, and the initiation node uses the routing path indicated by the content of the route metric to perform service transmission.

In an integrated access and backhaul (Integrated Access and Backhaul, IAB) system or a new radio (New Radio, NR) system, because different services have different sensitivities for latencies, if the foregoing method is used to obtain the routing path, a low-delay service may not be satisfied. For example, a latency required by an ultra-reliable and low-latency communication (Ultra high reliability low delay communication, URLLC) service needs to be within a range of 0.5 ms, the routing path is obtained by using the foregoing manner, and reliability of the routing path selected for the URLLC service is relatively low.

### SUMMARY

This application provides a service transmission method and apparatus, to improve reliability of a routing path selected for a service.

According to a first aspect, a service transmission method is provided. The method includes: sending, by a first node, a route request to a second node at a first moment, where the route request is used to request a routing path for at least one service; receiving, by the first node, a route response message at a second moment, where the route response message includes a route distinguisher, and the route distinguisher is used to indicate a routing path; and determining, by the first node based on a time interval between the first moment and the second moment, a target service that is in the at least one service and that is served by the routing path.

The first node may determine, based on duration of the time interval between the first moment and the second moment, a target service that can be served by the routing path. In this way, routing paths satisfying requirements of different services can be selected for the different services, thereby improving reliability of selecting the routing path for a service.

In some possible implementations, the determining, by the first node based on a time interval between the first moment and the second moment, a target service that is in the at least one service and that is served by the routing path includes: determining, by the first node, the target service based on a mapping relationship and the time interval, where the mapping relationship is a mapping relationship between at least one time interval and the at least one service.

In some possible implementations, the determining, by the first node based on a time interval between the first moment and the second moment, a target service that is in the at least one service and that is served by the routing path includes: determining, by the first node, the target service based on a size relationship between the time interval and a latency requirement of any one of the at least one service.

In some possible implementations, before the determining, by the first node based on a time interval between the first moment and the second moment, a target service, the method further includes: obtaining, by the first node, a latency requirement of each of the at least one service.

In some possible implementations, the obtaining, by the first node, a latency requirement of each of the at least one service includes: receiving, by the first node, the latency requirement of each of the at least one service.

In some possible implementations, the method further includes: starting, by the first node, a timer when sending the route request to the second node; where the receiving, by the first node, a route response message includes: receiving, by the first node, the route response message before the timer reaches a preset value.

In some possible implementations, the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

In some possible implementations, the method further includes: starting, by the first node, a timer when sending the route request to the second node; and determining, by the first node based on the timer, the second moment at which the route response message is received.

In some possible implementations, the sending, by a first node, a route request to a second node at a first moment includes: sending, by the first node, the route request to the second node when a link between the first node and an upper-level node is interrupted.

In some possible implementations, the method further includes: receiving, by the first node, the route request; and the sending, by a first node, a route request to a second node at a first moment includes: forwarding, by the first node, the route request to the second node at the first moment.

According to a second aspect, a service transmission method is provided. The method includes: receiving, by a second node, a first route request sent by a first node; obtaining, by the second node, a routing path based on the first route request; and sending, by the second node, a first route response message to the first node, where the first route response message carries a route distinguisher indicating the obtained routing path, and the first route response message is used by the first node to determine, based on a time interval between a moment at which the route request is sent and a moment at which the route response message is received, a service served by the routing path.

The second node receives the first route request, obtains the routing path based on the first route request, and sends the first route response message, where the first route response message carries the route distinguisher of the routing path. In this way, the first node may determine, based on duration of the time interval between the first moment and the second moment, the target service that can be served by the routing path. In this way, routing paths satisfying requirements of different services can be selected for the different services, thereby improving reliability of selecting the routing path for a service.

In some possible implementations, the obtaining, by the second node, a routing path based on the first route request includes: detecting and obtaining, by the second node, the routing path based on the first route request.

In some possible implementations, the obtaining, by the second node, a routing path based on the first route request includes: sending, by the second node, a second route request to a third node based on the first route request; and receiving, by the second node, a second route response message sent by the third node, where the second route response message includes the route distinguisher, and the route distinguisher is used to indicate the routing path.

In some possible implementations, the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

According to a third aspect, a routing path determining method is provided. The method includes: sending, by a first node, a route request to a second node; and receiving, by the first node, a route response message, where the route response message includes a route distinguisher, the route distinguisher is used to indicate a routing path, and the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

According to a fourth aspect, a routing path determining method is provided. The method includes: receiving, by a second node, a route request; determining, by the second node, a route response message based on the route request, where the route response message includes a route distinguisher, the route distinguisher is used to indicate a routing path, and the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes; and sending, by the second node, the route response message.

According to a fifth aspect, a service transmission apparatus is provided. The apparatus may be a first node, or may be a chip in the first node. The apparatus has a function of implementing the embodiments of the first aspect. The function may be implemented by hardware, or may be implemented by hardware executing corresponding software. The hardware or the software includes one or more units corresponding to the foregoing function.

In a possible design, when the apparatus is the first node, the first node includes a processing module and a transceiver module. The processing module may be, for example, a processor. The transceiver module may be, for example, a transceiver, and the transceiver includes a radio frequency circuit. Optionally, the first node further includes a storage unit, and the storage unit may be, for example, a memory. When the first node includes the storage unit, the storage unit is configured to store a computer-executable instruction, the processing module is connected to the storage unit, and the processing module executes the computer-executable instruction stored in the storage unit, so that the first node is enabled to perform the service transmission method according to any implementation of the first aspect.

In another possible design, when the apparatus is the chip in the first node, the chip includes a processing module and a transceiver module. The processing module may be, for example, a processor, and the transceiver module may be, for example, an input/output interface, a pin, or a circuit on the chip. The processing module may execute the computer-executable instruction stored in the storage unit, so that the chip in a terminal is enabled to perform the service transmission method according to any implementation of the first aspect. Optionally, the storage unit is a storage unit in the chip, for example, a register or a cache. The storage unit may alternatively be a storage unit that is in the first node and that is located outside the chip, for example, a read-only memory (read-only memory, ROM), another type of static storage device that can store static information and a static instruction, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the service transmission method according to the first aspect.

According to a sixth aspect, a service transmission apparatus is provided. The apparatus may be a second node, or may be a chip in the second node. The service transmission apparatus has a function of implementing the embodiments of the second aspect. The function may be implemented by hardware, or may be implemented by hardware executing corresponding software. The hardware or the software includes one or more units corresponding to the foregoing function.

In a possible design, when the service transmission apparatus is the second node, the second node includes a processing module and a transceiver module. The processing module may be, for example, a processor. The transceiver module may be, for example, a transceiver, and the transceiver includes a radio frequency circuit. Optionally, the second node further includes a storage unit, and the storage unit may be, for example, a memory. When the second node includes the storage unit, the storage unit is configured to store a computer-executable instruction, the processing module is connected to the storage unit, and the processing module executes the computer-executable instruction stored in the storage unit, so that the second node is enabled to perform the service transmission method according to any implementation of the second aspect.

In another possible design, when the apparatus is the chip in the second node, the chip includes a processing module and a transceiver module. The processing module may be, for example, a processor, and the transceiver module may be, for example, an input/output interface, a pin, or a circuit in the chip. The processing module may execute the computer-executable instruction stored in the storage unit, so that the chip in the second node is enabled to perform the service transmission method according to any implementation of the second aspect. Optionally, the storage unit is a storage unit in the chip, for example, a register or a cache. The storage unit may alternatively be a storage unit that is in the second node and that is located outside the chip, for example, a ROM, another type of static storage device that can store static information and a static instruction, or a RAM

The processor mentioned anywhere above may be a CPU, a microprocessor, an ASIC, or one or more integrated circuits for controlling program execution of the service transmission method according to the second aspect.

According to a seventh aspect, a computer storage medium is provided. The computer storage medium stores program code. The program code is used to indicate an instruction of performing the methods according to any one of the first aspect, the second aspect, the third aspect, the fourth aspect, and the possible implementations of the aspects.

According to an eighth aspect, a computer program product including an instruction is provided. When the computer program product is run on a computer, the computer is enabled to perform the method according to any one of the first aspect, the second aspect, the third aspect, the fourth aspect, and the possible implementations of the aspects.

Based on the foregoing solution, the first node may determine, based on the duration of the time interval between the first moment and the second moment, the target service that can be served by the routing path. In this way, routing paths satisfying requirements of different services can be selected for the different services, thereby improving reliability of selecting the routing path for a service.

### BRIEF DESCRIPTION OF DRAWINGS

FIG. 1 is a schematic diagram of a wireless communications system according to an embodiment of this application;
FIG. 2 is a schematic diagram of an application scenario according to an embodiment of this application;
FIG. 3 is a schematic flowchart of a service transmission method according to an embodiment of this application;
FIG. 4 is a schematic diagram of a service transmission method according to a specific embodiment of this application;
FIG. 5 is a schematic block diagram of a service transmission apparatus according to an embodiment of this application;
FIG. 6 is a schematic structural diagram of a service transmission apparatus according to an embodiment of this application;
FIG. 7 is a schematic block diagram of a service transmission apparatus according to an embodiment of this application;
FIG. 8 is a schematic structural diagram of a service transmission apparatus according to an embodiment of this application; and
FIG. 9 is a schematic structural diagram of a wireless communications system according to an embodiment of this application.

### DESCRIPTION OF EMBODIMENTS

The following describes technical solutions of this application with reference to accompanying drawings.

In the specification, claims, and accompanying drawings of this application, the terms "first", "second", and the like are intended to distinguish between similar objects but do not necessarily indicate a specific order or sequence. It should be understood that the data used in such a way are interchangeable in proper circumstances, so that the embodiments described herein can be implemented in other orders than the order illustrated or described herein. In addition, the terms "include", "have", or any other variant thereof are intended to cover a non-exclusive inclusion. For example, a process, a method, a system, a product, or a device that includes a series of steps or modules is not necessarily limited to the steps or modules that are expressly listed, but may include another step or module not expressly listed or inherent to the process, the method, the product, or the device. The module division in this specification is merely logical division, and there may be another division during implementation in actual application. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or another form. This is not limited in this specification. In addition, modules or sub-modules described as separate parts may be or may not be physically separated, or may be or may not be physical modules, or may be distributed on a plurality of circuit modules. Objectives of the solutions of the embodiments of this application may be implemented by selecting some or all of the modules based on an actual requirement.

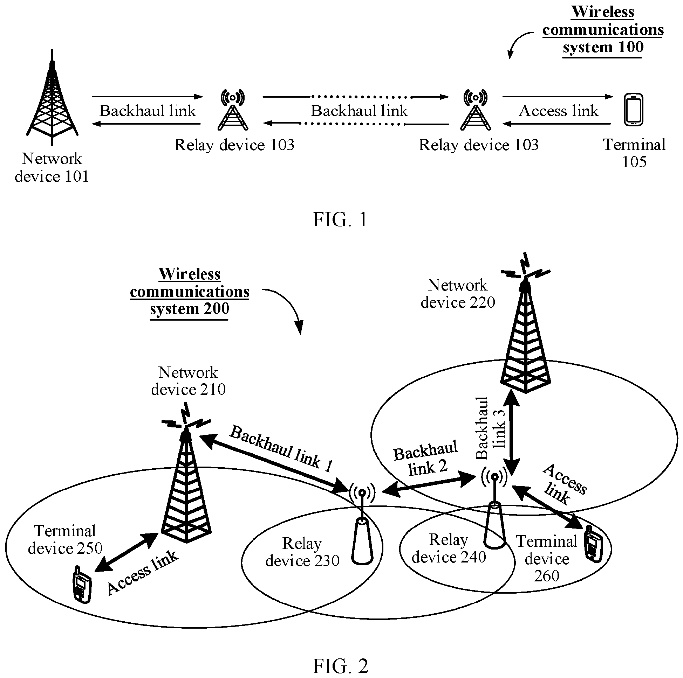

FIG. 1 shows a wireless communications system in this application. The wireless communications system may be a long term evolution (Long Term Evolution, LTE) system, or may be a future evolved fifth generation mobile communications (the 5th Generation, 5G) system, a new radio (NR) system, a machine to machine (Machine to Machine, M2M) communications system, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), an LTE frequency division duplex (Frequency Division Duplex, FDD) system, an LTE time division duplex (Time Division Duplex, TDD) system, an universal mobile telecommunication system (Universal Mobile Telecommunication System, UMTS), and a worldwide interoperability for microwave access (Worldwide Interoperability for Microwave Access, WiMAX) communications system.

As shown in FIG. 1, the wireless communications system 100 may include a network device 101, a terminal device 105, and a relay device 103. The wireless communications system 100 includes a single-hop relay system or a multi-hop relay system. In the multi-hop relay system, referring to FIG. 1, there are at least two relay devices 103 between the network device 101 and the terminal device 105. However, in the single-hop relay system, there is only one relay device 103 between the network device 101 and the terminal device 105.

The network device may be configured to communicate with one or more terminal devices, or may be configured to communicate with one or more network devices that have some functions of the terminal devices (for example, communication between a macro base station and a micro base station, such as an access point). The network device may be a base transceiver station (Base Transceiver Station, BTS) in the global system for mobile communications (Global System of Mobile communication, GSM) or the code division multiple access (code division multiple access, CDMA) system, a NodeB (NodeB, NB) in the wideband code division multiple access (Wideband Code Division Multiple Access, WCDMA) system, a base transceiver station (Base Transceiver Station, BTS) in a time division-synchronous code division multiple access (Time DivisionSynchronous Code Division Multiple Access, TD-SCDMA) system, an evolved NodeB (evolutional NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a base station in a future system or a new radio (NR) system, a base station in a future evolved PLMN network, or the like. In addition, the network device may alternatively be an access point (Access Point, AP), a transmission node (Trans TRP), a central unit (Central Unit, CU), or another network entity, and may include some or all of functions of the foregoing network entity. This is not limited in the embodiments of this application.

The terminal device (Terminal) in the embodiments of this application may be a device that provides a user with voice and/or data connectivity, a handheld device with a radio connection function, or another processing device connected to a wireless modem. The terminal device may communicate with one or more core networks through a radio access network (Radio Access Network, RAN). The terminal device 105 may be static or mobile. For example, the terminal device 105 may be user equipment, an access terminal, a subscriber unit, a subscriber station, a mobile station, a remote station, a remote terminal, a user terminal, a wireless communications device, a user apparatus, a mobile device, a mobile station (mobile station), a mobile unit (mobile unit), an M2M terminal, a wireless unit, a remote unit, a user agent, a mobile client, a smartwatch, a notebook computer, a tablet computer, or a smart band. Alternatively, the terminal device may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN). This is not limited in the embodiments of this application.

The relay device may be a relay base station, for example, a micro base station. Alternatively, the relay device may be a terminal device that provides a relay function. Alternatively, the relay device may be a network entity such as a relay transceiver node, customer terminal equipment (customer premise equipment, CPE), a relay transceiver, a relay agent, a relay node (Relaying Node, RN), a transmission reception point (transmission and Reception Point, TRP), or a relay transmission reception point (relaying TRP, rTRP). During specific implementation, the relay device may be distributed on an edge of a cell, and a coverage area of the network device may be expanded.

In the wireless communications system 100, an access link (access link, AC) is a radio link between the relay device and the terminal device. The access link includes an uplink (uplink, UL) access link and/or a downlink (downlink, DL) access link. A backhaul link (backhaul link, BH) is a radio link between the network device and the relay device, or a link between the relay device and another relay device. The backhaul link includes an uplink backhaul link and/or a downlink backhaul link.

It should be understood that a name of a link between the network device and the relay device, a name of a link between two relay devices, and a name of a link between the relay device and the terminal device are not limited in this application. In addition, in the embodiments of this application, the network device may also be referred to as a "provider network device".

In the wireless communications system 100, the relay device 103 between the network device 101 and the terminal device 105 may be configured to forward a radio signal between the network device 101 and the terminal device 105. Specifically, during downlink transmission, the relay device 103 is responsible for forwarding a radio signal transmitted by the network device 101, to finally transmit the radio signal to the terminal device 105. During uplink transmission, the relay device 103 is responsible for forwarding a radio signal transmitted by the terminal device 105, to finally transmit the radio signal to the network device 101.

It should be noted that the wireless communications system 100 shown in FIG. 1 is only intended to describe the technical solutions of this application more clearly, but is not intended to limit this application. A person of ordinary skill in the art may know that as a network architecture evolves and a new service scenario emerges, the technical solutions provided in this application are also applicable to a similar technical problem.

FIG. 2 is a schematic diagram of an application scenario according to an embodiment of this application. The wireless communications system 200 shown in FIG. 2 includes a network device 210, a network device 220, a relay device 230, a relay device 240, a terminal device 250, and a terminal device 260. If the relay device 230 has established a connection with the network device 210, and the relay device 240 accesses the relay device 230, the relay device 240 becomes a lower-level node of the relay device 230. In this way, the relay device 240 may be referred to as a "multi-hop relay structure" in the structure shown in FIG. 2. In addition, if the relay device 240 has established a connection with the network device 220, the relay device 240 may also access the relay device 230 to become a lower-level node of the relay device 230. To be specific, the relay device 240 may be located in a connection from the network device 210 to the relay device 230 or the relay device 240, or may be located in a connection from the network device 220 to the relay device 240. Therefore, the structure may be referred to as a "multi-connection relay structure".

It should be understood that a quantity of relay devices is not limited in the wireless communications system in this embodiment of this application. For example, the wireless communications system may include three, four, or five relay devices.

In a multi-hop multi-connection relay structure, transmission stability of a backhaul link 1 determines a system capacity of an entire network. For example, if the backhaul link 1 shown in FIG. 2 is interrupted, data of a terminal device 2 corresponding to an access link 2 cannot be forwarded to the network device, and can only be stacked in the relay device 1. In addition, data of the relay device 2 is also stacked in the relay device 1 and cannot be forwarded to the network device. Therefore, in the multi-hop multi-connection relay structure, a new route needs to be found in time, to reduce data accumulation or even data loss caused by interruption of the backhaul link 1.

In a traditional wireless mesh (mesh) network, when a node in the network has a route requirement, the node initiates a route request (PREQ) message, and carries a route selection indicator (latency, transmission capability, load, and the like) in the PREQ message. After a node in the mesh network receives the PREQ message, the node finds, based on the route selection indicator, a node that can access the network. After the node that can access the network is found, the node that can access the network initiates a route response (PREP) message, content that is of a route metric and that is carried in the PREQ message is fed back to a route initiation node, and the initiation node uses the routing path indicated by the content of the route metricThere to perform service transmission.

In an IAB scenario or an NR system, because different services have different sensitivities for latencies, if the foregoing method is used to obtain the routing path, a low latency service may not be satisfied. For example, a latency required by the URLLC service needs to be within a range of 0.5 ms, the routing path is obtained by using the foregoing manner, and reliability of the routing path selected for the URLLC service is relatively low.

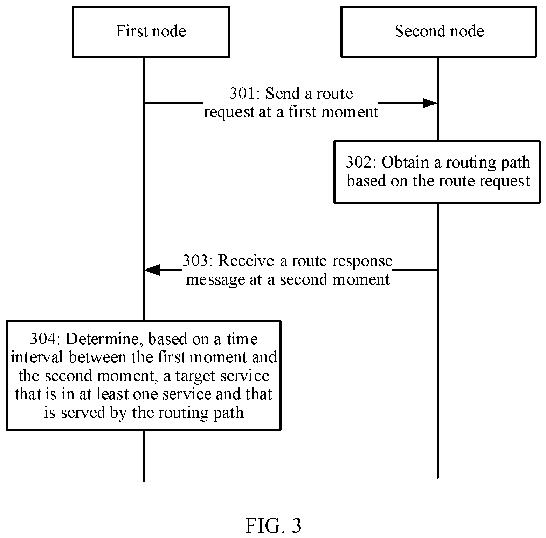

FIG. 3 is a schematic flowchart of a service transmission method according to an embodiment of this application.

301: A first node sends a route request to a second node at a first moment, where the route request is used to request a routing path for at least one service.

Specifically, the route request may be sent when a service requires the routing path, or may be sent when a plurality of services require the routing path.

Optionally, the first node may send the route request to the second node when the link to the upper-level node is interrupted, or when the link to the upper-level node is congested, or when the first node has another requirement for a new routing path.

Specifically, the first node records a sending moment at which the first node sends the route request, namely, the first moment.

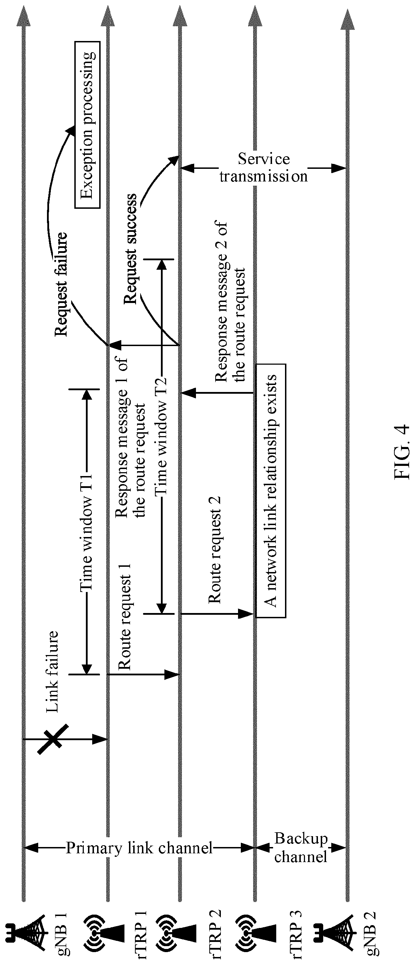

For example, as shown in FIG. 4, the first node may be an rTRP 1 or an rTRP 2.

Correspondingly, when the first node is the rTRP 1, the second node may be the rTRP 2. When the first node is the rTRP 2, the second node is an rTRP 3.

Optionally, the route request may be actively sent by the first node, or may be sent by the first node as triggered by another node. For example, as shown in FIG. 4, when the first node is the rTRP 2, the rTRP 2 sends a route request 2 to the rTRP 3 after receiving the route request 1 sent by the rTRP 1.

302: The second node obtains a routing path based on the route request.

Specifically, the routing path may be a routing path that can be used to provide a service for the second node, or the routing path can be connected to a network device.

Optionally, the route request may have only a triggering function. To be specific, after receiving the route request, the second node immediately starts to obtain the routing path.

Optionally, the second node may detect and obtain the routing path of the second node.

Specifically, the second node may detect whether the second node has a routing path that can provide a service for the service. If obtaining, through detection, that the second node can provide the service for the service, the second node obtains the routing path.

Optionally, the second node may alternatively forward the route request to a third node, and the third node detects and obtains, based on the route request, the routing path that can provide the service for the service.

Specifically, the second node sends the route request to the third node, and the third node receives the route request, to detect whether the third node has the routing path that can provide the service for the service. If detecting that the third node has the routing path that can provide the service for the service, the third node obtains the routing path that can provide the service for the service.

For example, as shown in FIG. 4, the first node is the rTRP 1, the rTRP 1 sends a route request 1 to the rTRP 2, the rTRP 2 sends a route request 2 to the rTRP 3, and the rTRP 3 can be connected to a gNB 2. In this case, the rTRP 3 feeds back a route response message 2 to the rTRP 2. The rTRP 2 feeds back a route response message 1 to the rTRP 1.

It should be noted that a frame structure of the route request sent by the first node to the second node may be different from a frame structure of the route request sent by the second node to the third node.

It should be understood that a link between the gNB 1, the rTRP 1, the rTRP 2, and the rTRP 3 may be referred to as a "primary link channel", and a link between the rTRP 3 and the gNB 2 may be referred to as a "backup channel".

Optionally, when the third node also does not have the routing path that can provide the service for the service, the third node may further send the route request to a lower-level node, and the lower-level node may further send the route request to a lower lower-level node, till the routing path that can provide the service for the service is obtained through detection.

Optionally, the second node may simultaneously detect whether the second node has the routing path that can provide the service for the service and send the route request to the third node. Alternatively, the second node sends the route request to the third node when obtaining, through detection, that the second node does not have the routing path that can provide the service for the service. This is not limited in this application.

303: The first node receives the route response message sent by the second node at a second moment, where the route response message includes a route distinguisher, and the route distinguisher is used to indicate the routing path.

Optionally, the first node may start a timer when sending the route request to the second node.

Optionally, the first node may set a preset value and receive the route response message before the timer reaches the preset value. If the route response message may be not detected after the timer reaches the preset value, or the received route message is not parsed, validity of the selected routing path is ensured.

For example, as shown in FIG. 4, the rTRP 2 is the first node. After receiving a route request 1 sent by the rTRP 1, the rTRP 2 sends a route request 2 to the rTRP 3, and the rTRP 2 starts a timer 1 when sending the route request 1. A preset value set by the rTRP 1 is a time window T1, the rTRP 2 starts a timer 2 when sending the route request 2, and a preset value set by the rTRP 2 is a time window T2. If the rTRP 2 receives a response message 2 of the route request before T2, the rTRP 2 finds a proper routing path, that is, the route request succeeds. The rTRP 2 sends a response message 1 of the route request to the rTRP 1. If the rTRP 1 receives the response message 1 of the route request after the time window T1 is reached, the response message 1 of the route request is invalid, that is, the route request fails.

It should be noted that if the first node receives the route response message before the timer reaches the preset value, the first node may stop timing of the timer.

Optionally, the preset value may alternatively be a latency value of a latency requirement of any one of services served by the first node.

For example, the preset value may be a latency value with a shortest latency requirement in all the services served by the first node. In this way, the first node may ensure that the routing path indicated by the received route response message can meet requirements of all the services that can be served by the first node.

For another example, the preset value may be a latency value of a service whose latency value of latency requirements of all the services served by the first node are sorted in a central position. To be specific, the first node temporarily does not need to find a routing path for a service whose latency value is less than the latency value, thereby improving efficiency of selecting a routing path for a service.

Optionally, the preset value may alternatively be any value less than a latency value with a shortest latency requirement in all the services served by the first node, or any value greater than a latency value with a longest latency requirement in all the services served by the first node. This is not limited in this application.

Optionally, the route response message may further include at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

Specifically, the route response message may further include node information of all nodes through which the routing path passes or the information about the latency between the adjacent nodes. The first node performs proper determining based on the node information of nodes at all levels and/or the information about the latency between the adjacent nodes that are/is included in the route response message, to determine whether the routing path satisfies a requirement of a service. The route response message may further include the information about the beam pair for communication between the adjacent nodes or the information about the quality of the beam pair for communication between the adjacent nodes. In this way, the first node may determine, based on the information about the beam pair and/or the information about the quality of the beam pair, a beam pair that may be used to transmit a service by using the routing path, thereby further improving service transmission quality.

It should be noted that the adjacent nodes refer to two nodes that can directly communicate with each other. For example, as shown in FIG. 4, when a link between the rTRP 1 and the gNB 1 fails, the rTRP 1 sends a route request 1 to the rTRP 2, the rTRP 2 sends a route request 2 to the rTRP 3, and the rTRP 3 obtains, through detection, a routing path that can provide a service, the route response message is fed back to the rTRP 1 by using the rTRP 2, where the adjacent nodes may be between the rTRP 1 and the rTRP 2, or may be between the rTRP 2 and the rTRP 3.

The information about the beam pair may be a beam index, for example, a channel state resource indicator (Channel State Information Reference Signal resource indicator, CRI) or a transmission configuration indication (transmission configuration indication, TCI). The information about the quality of the beam pair may be at least one of reference signal received power (Reference Signal Received Power, RSRP), a signal to interference plus noise ratio (Signal to Interference plus Noise Ratio, SINR), or other quality information.

304: The first node determines, based on the time interval between the first moment and the second moment, a target service served by the routing path.

Specifically, when the first node sends the route request when a plurality of services have a requirement for the routing path, the first node may determine, based on duration of the time interval between the first moment and the second moment, the target service that can be served by the routing path. In this way, routing paths satisfying requirements of different services can be selected for the different services, thereby improving reliability of selecting the routing path for a service.

In addition, when a plurality of services require the routing path, the first node may send the route request only once, and determine, based on the time interval, services that can be served by the routing path indicated by the route distinguisher carried in the route response message. In this way, it is avoided that the route request is sent when each service has a requirement for the routing path, and mutual interference between the route request and the route response message responding to the route request is reduced.

In addition, because the first node determines, based on the duration of the time interval between the first moment and the second moment, the target service that can be served by the routing path, in other words, the first node may consider to match a latency of a service requirement with a sum of service processing duration and air interface transmission duration, a more proper routing path can be selected for the service, thereby further ensuring service transmission.

For example, when the first node sends the route request when a service has a requirement for the routing path, the first node determines, based on the duration of the time interval between the first moment and the second moment, that a routing path that meets the requirement is more appropriate than a routing path obtained in a conventional solution, and service transmission is further ensured.

It should be noted that the target service may be one or more of the at least one service. This is not limited in this application.

Optionally, the first node transmits the target service on the obtained routing path.

Optionally, the first node obtains a latency requirement of the at least one service.

Specifically, the first node may determine a latency requirement of each of the at least one service, or may receive a latency requirement that is of each service and that is sent by an upper-level node.

Optionally, a latency requirement of a service may be duration from a moment at which a node receives the service from the upper-level node to a moment at which the service is processed and appears on an air interface of a lower-level node. To be specific, a latency of a service requirement is a sum of service processing duration and air interface transmission duration. In this way, a more appropriate routing path can be selected for each service by using an accurate latency requirement of the service and the time interval, thereby ensuring transmission of different services.

Optionally, the first node may store a mapping relationship, where the mapping relationship is a mapping relationship between at least one time interval and the at least one service.

Specifically, the mapping relationship may be determined based on a correspondence between the time interval and a latency required by a service. In this way, the first node may determine, based on the mapping relationship, a service corresponding to a time interval between a moment at which the route request is sent and a moment at which the route response message is received.

Optionally, the first node may also determine, based on a size relationship between the time interval and a latency requirement of a service, a service that can be served by the routing path.

Specifically, the first node may set a latency requirement of a first service in the at least one service to a preset value, and the first node may determine, based on the size relationship between the time interval and the preset value, whether the routing path can provide a service for the first service. If the time interval between the first moment at which the first node sends the route request and the second moment at which the first node receives the route response message is greater than the preset value, the first node may use the routing path indicated by the route response message to provide the service for the first service. Alternatively, if the time interval is less than the preset value, the routing path cannot be used to provide the service for the first service.

When determining that the obtained routing path can provide the service for the first service, the first node may add the routing path to a route list of the first service. If the routing path cannot provide the service for the first service, the routing path is not added to the route list of the first service.

Optionally, a latency requirement of a service may be within a range of a time period. In this way, the first node may also determine, based on the time interval between the first moment and the second moment, whether the time interval is within the range of the time period. If the time interval is within the range of the time period, the first node may use the routing path indicated by the route response message to provide the service for the first service. Alternatively, if the time interval is not within the range of the time period, the first node does not select the routing path indicated by the route response message, and use the routing path to provide the service for the first service.

It should be understood that in the embodiments of this application, specific examples are merely intended to help a person skilled in the art better understand the embodiments of this application, rather than limit the scope of the embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementations of the embodiments of this application.

The foregoing describes the service transmission method according to the embodiments of this application in detail, and the following describes service transmission apparatuses in the embodiments of this application.

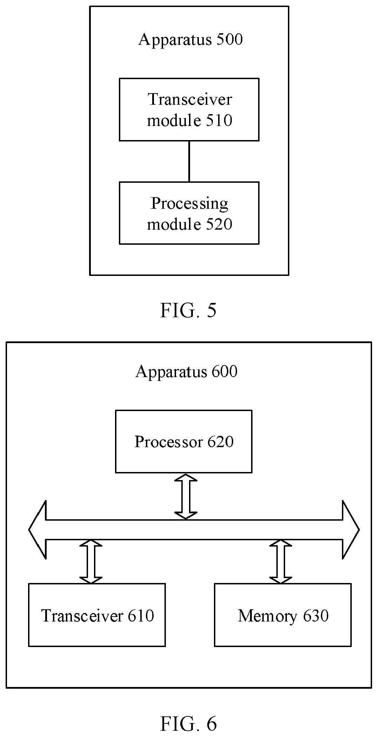

FIG. 5 shows a service transmission apparatus 500 according to an embodiment of this application. The service transmission apparatus 500 may be the first node.

It should be understood that the service transmission apparatus 500 may correspond to the first node in the method embodiments, and may have any function of the first node in the method.

A transceiver module 510 is configured to send a route request to a second node at a first moment, where the route request is used to request a routing path for at least one service.

The transceiver module 510 is further configured to receive a route response message at a second moment, where the route response message includes a route distinguisher, and the route distinguisher is used to indicate the routing path.

A processing module 520 is configured to determine, based on a time interval between the first moment and the second moment, a target service that is in the at least one service and that is served by the routing path.

Optionally, the processing module 520 is specifically configured to determine the target service based on a mapping relationship and the time interval, where the mapping relationship is a mapping relationship between at least one time interval and the at least one service.

Optionally, the processing module 520 is specifically configured to determine the target service based on a size relationship between the time interval and a latency requirement of any one of the at least one service.

Optionally, the transceiver module 510 is further configured to obtain a latency requirement of each of the at least one service.

Optionally, the transceiver module 510 is further configured to receive a latency requirement of each of the at least one service.

Optionally, the processing module 520 is further configured to start a timer when sending the route request to the second node. The transceiver module 510 is specifically configured to receive the route response message before the timer reaches a preset value.

Optionally, the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

Optionally, the service transmission apparatus 500 in this embodiment of this application may be the first node, or may be a chip in the first node.

It should be understood that the service transmission apparatus 500 according to this embodiment of this application may correspond to the first node used in the service transmission method in the embodiment shown in FIG. 3. In addition, the foregoing and other management operations and/or functions of the modules in the service transmission apparatus 500 are separately used to implement corresponding steps in the foregoing methods. For brevity, details are not described herein again.

Optionally, if the service transmission apparatus 500 is the first node, the transceiver module 510 in this embodiment of this application may be implemented by a transceiver 610, and the processing module 520 may be implemented by a processor 620. As shown in FIG. 6, the service transmission apparatus 600 may include the transceiver 610, the processor 620, and a memory 630. The memory 630 may be configured to store indication information, or may be configured to store code, an instruction, and the like that are executed by the processor 620. The transceiver 610 may include a radio frequency circuit. Optionally, the first node further includes a storage unit.

The storage unit may be, for example, a memory. When the first node includes the storage unit, the storage unit is configured to store a computer-executable instruction, a processing unit is connected to the storage unit, and the processing unit executes the computer-executable instruction stored in the storage unit, so that the first node is enabled to perform the service transmission method.

Optionally, if the service transmission apparatus 500 is the chip in the first node, the chip includes the processing module 520 and the transceiver module 510. The transceiver module 510 may be implemented by the transceiver 610, and the processing module 520 may be implemented by the processor 620. The transceiver module may be, for example, an input/output interface, a pin, or a circuit. The processing module may execute the computer-executable instruction stored in the storage unit. The storage unit is a storage unit in the chip, for example, a register or a cache. The storage unit may alternatively be a storage unit that is in a terminal and that is located outside the chip, for example, a read-only memory (read-only memory, ROM), another type of static storage device that can store static information and a static instruction, or a random access memory (random access memory, RAM).

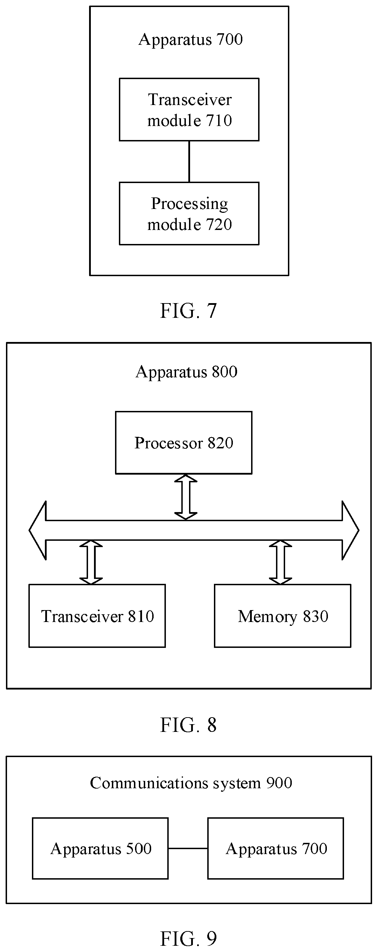

FIG. 7 shows a service transmission apparatus 700 according to an embodiment of this application. The service transmission apparatus 700 may be the second node.

It should be understood that the service transmission apparatus 700 may correspond to the second node in the method embodiments, and may have any function of the second node in the methods.

A transceiver module 710 is configured to receive a first route request sent by a first node;

A processing module 720 is configured to obtain a routing path based on the first route request.

The transceiver module 710 is further configured to send a first route response message to the first node, where the first route response message carries a route distinguisher indicating the obtained routing path, and the first route response message is used by the first node to determine, based on a time interval between a moment at which the route request is sent and a moment at which the route response message is received, a service served by the routing path.

Optionally, the processing module 720 is specifically configured to detect and obtain the routing path based on the first route request.

Optionally, the processing module 720 is specifically configured to: send a second route request to a third node based on the first route request; and receive a second route response message sent by the third node, where the second route response message includes the route distinguisher, and the route distinguisher is used to indicate the routing path.

Optionally, the route response message includes at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

It should be understood that the service transmission apparatus 700 according to this embodiment of this application may correspond to the second node used in the service transmission method in the embodiment shown in FIG. 3. In addition, the foregoing and other management operations and/or functions of the modules in the service transmission apparatus 700 are separately used to implement corresponding steps in the foregoing methods. For brevity, details are not described herein again.

Optionally, if the service transmission apparatus 700 is the second node, the transceiver module 710 in this embodiment of this application may be implemented by a transceiver 810, and the processing module 720 may be implemented by a processor 820. As shown in FIG. 8, the service transmission apparatus 800 may include the transceiver 810, the processor 820, and a memory 830. The memory 830 may be configured to store indication information, and may be further configured to store code, an instruction, and the like that are executed by the processor 820. The transceiver 810 may include a radio frequency circuit. Optionally, the second node further includes a storage unit.

The storage unit may be, for example, a memory. When the second node includes the storage unit, the storage unit is configured to store a computer-executable instruction, a processing unit is connected to the storage unit, and the processing unit executes the computer-executable instruction stored in the storage unit, so that the second node is enabled to perform the service transmission method.

Optionally, if the service transmission apparatus 700 is the chip in the second node, the chip includes the processing module 720 and the transceiver module 710. The transceiver module 710 may be implemented by the transceiver 810, and the processing module 720 may be implemented by the processor 820. The transceiver module may be, for example, an input/output interface, a pin, or a circuit. The processing module may execute the computer-executable instruction stored in the storage unit. The storage unit is a storage unit in the chip, for example, a register or a cache. The storage unit may alternatively be a storage unit that is in a terminal and that is located outside the chip, for example, a read-only memory (read-only memory, ROM), another type of static storage device that can store static information and a static instruction, or a random access memory (random access memory, RAM).

It should be understood that the processor 620 or the processor 820 may be an integrated circuit chip and have a signal processing capability. During implementation, steps in the foregoing method embodiments may be implemented by using a hardware integrated logical circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA), another programmable logical device, a discrete gate, a transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory 630 or the memory 830 in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus dynamic random access memory (Direct Rambus RAM, DR RAM). It should be noted that the memory of the systems and methods described in this specification includes but is not limited to these and any memory of another proper type.

FIG. 9 shows a communications system 900 according to an embodiment of this application. The communications system 900 includes:
the service transmission apparatus 500 in the embodiment shown in FIG. 5 and the service transmission apparatus 700 in the embodiment shown in FIG. 7.

An embodiment of this application further provides a computer storage medium, and the computer storage medium may store a program instruction used to indicate any one of the foregoing methods.

Optionally, the storage medium may be specifically the memory 630 or 830.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and another division manner may be used in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service transmission method, comprising:
sending, by a first node, a route request to a second node at a first moment, wherein the route request is used to request a routing path for at least one service;
receiving, by the first node, a route response message at a second moment, wherein the route response message comprises a route distinguisher, and the route distinguisher is used to indicate the routing path; and
determining, by the first node based on a time interval between the first moment and the second moment, a target service that is in the at least one service and that is served by the routing path.

2. The method according to claim 1, wherein the determining, by the first node based on a time interval between the first moment and the second moment, a target service that is in the at least one service and that is served by the routing path comprises:
determining, by the first node, the target service based on a mapping relationship and the time interval, wherein the mapping relationship is a mapping relationship between at least one time interval and the at least one service.

3. The method according to claim 1, wherein the determining, by the first node based on a time interval between the first moment and the second moment, a target service that is in the at least one service and that is served by the routing path comprises:
determining, by the first node, the target service based on a size relationship between the time interval and a latency requirement of any one of the at least one service.

4. The method according to any one of claims 1 to 3, further comprising:
starting, by the first node, a timer when sending the route request to the second node, wherein
the receiving, by the first node, a route response message comprises:
receiving, by the first node, the route response message before the timer reaches a preset value.

5. The method according to any one of claims 1 to 4, wherein the route response message comprises at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

6. A service transmission method, comprising:
receiving, by a second node, a first route request sent by a first node;
obtaining, by the second node, a routing path based on the first route request; and
sending, by the second node, a first route response message to the first node, wherein the first route response message carries a route distinguisher indicating the obtained routing path, and the first route response message is used by the first node to determine, based on a time interval between a moment at which the route request is sent and a moment at which the route response message is received, a service served by the routing path.

7. The method according to claim 6, wherein the obtaining, by the second node, a routing path based on the first route request comprises:
detecting and obtaining, by the second node, the routing path based on the first route request.

8. The method according to claim 6, wherein the obtaining, by the second node, a routing path based on the first route request comprises:
sending, by the second node, a second route request to a third node based on the first route request; and
receiving, by the second node, a second route response message sent by the third node, wherein the second route response message comprises the route distinguisher, and the route distinguisher is used to indicate the routing path.

9. The method according to any one of claims 6 to 8, wherein the route response message comprises at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

10. A service transmission apparatus, comprising:
a transceiver module, configured to send a route request to a second node at a first moment, wherein the route request is used to request a routing path for at least one service, wherein
the transceiver module is further configured to receive a route response message at a second moment, wherein the route response message comprises a route distinguisher, and the route distinguisher is used to indicate the routing path; and
a processing module, configured to determine, based on a time interval between the first moment and the second moment, a target service that is in the at least one service and that is served by the routing path.

11. The apparatus according to claim 10, wherein the processing module is specifically configured to:
determine the target service based on a mapping relationship and the time interval, wherein the mapping relationship is a mapping relationship between at least one time interval and the at least one service.

12. The apparatus according to claim 10, wherein the processing module is specifically configured to:
determine the target service based on a size relationship between the time interval and a latency requirement of any one of the at least one service.

13. The apparatus according to any one of claims 10 to 12, wherein the processing module is further configured to start a timer when sending the route request to the second node; and
the transceiver module is specifically configured to:
receive the route response message before the timer reaches a preset value.

14. The apparatus according to any one of claims 10 to 13, wherein the route response message comprises at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

15. A service transmission apparatus, comprising:
a transceiver module, configured to receive a first route request sent by a first node; and
a processing module, configured to obtain a routing path based on the first route request; and
the transceiver module is further configured to send a first route response message to the first node, wherein the first route response message carries a route distinguisher indicating the obtained routing path, and the first route response message is used by the first node to determine, based on a time interval between a moment at which the route request is sent and a moment at which the route response message is received, a service served by the routing path.

16. The apparatus according to claim 15, wherein the processing module is specifically configured to:
detect and obtain the routing path based on the first route request.

17. The apparatus according to claim 16, wherein the processing module is specifically configured to:
send a second route request to a third node based on the first route request; and
receive a second route response message sent by the third node, wherein the second route response message comprises the route distinguisher, and the route distinguisher is used to indicate the routing path.

18. The apparatus according to any one of claims 15 to 17, wherein the route response message comprises at least one of node information of a node through which a routing path corresponding to the route distinguisher passes, information about a latency between adjacent nodes through which the routing path corresponding to the route distinguisher passes, information about a beam pair for communication between the adjacent nodes, and information about quality of the beam pair for communication between the adjacent nodes.

19. A computer-readable storage medium, comprising an instruction, wherein when the instruction is run on a computer, the computer is enabled to perform the methods according to any one of claims 1 to 9.

20. A computer program product, wherein when the computer program product is run on a computer, the computer is enabled to perform the methods according to any one of claims 1 to 9.
